# EUROPEAN PATENT SPECIFICATION

(11) **EP 3 830 459 B1**
(45) Date of publication and mention of the grant of the patent: **10.11.2021**
(21) Application number: 19765561.6
(22) Date of filing: 01.08.2019
(51) Int. Cl.: F16K 37/00, F16K 31/04

(54) **METHOD FOR MONITORING THE SHUT-OFF VALVE OF A GAS METER AND GAS METER THEREOF**
VERFAHREN ZUR ÜBERWACHUNG DES ABSPERRVENTILS EINES GASZÄHLERS UND GASZÄHLER DAFÜR
PROCÉDÉ DE SURVEILLANCE DU ROBINET D'ARRÊT D'UN COMPTEUR DE GAZ ET COMPTEUR DE GAZ ASSOCIÉ

(30) Priority: 02.08.2018 IT 201800007791
(43) Date of publication of application: 09.06.2021
(73) Proprietor: Metersit S.r.l., 35129 Padova (IT)
(72) Inventor: FONTANA, Camillo, 35129 Padova (IT); BIANCHI, Claudio, 35129 Padova (IT); GRASSO, Luca, 35129 Padova (IT); GHIDINI, Ivan, 35129 Padova (IT)
(74) Representative: Di Bernardo, Antonio
(86) International application number: PCT/IB2019/056568
(87) International publication number: WO 2020/026188

(56) References cited:
- DE-A1-102011 101 074
- US-A1- 2008 054 209
- US-A1- 2012 001 105
- US-A1- 2014 343 734
- US-A1- 2016 369 898

## Description

### TECHNICAL FIELD

The present invention relates to the field of fluid meters. In particular, the invention relates to a method for monitoring a shut-off valve of a gas meter and a gas meter adapted to implement such method.

### BACKGROUND ART

As is known, gas meters are used for measuring the amount of gas supplied to a user.

Thus, known meters comprise an inlet conduit for the connection to the gas distribution network, and an outlet conduit for the connection to the user.

A shut-off valve is arranged inside the meter, typically in line with the inlet conduit, capable of selectively blocking the flow of gas to the meter and, thus, supplying gas to the user placed downstream of the meter.

Therefore, it is essential to know the state of the shut-off valve to control the gas supply correctly.

To this end, it is known to check the state of the shut-off valve, for example, with a ball shutter, arranging opportune electric switches, which are activated by the movement of the shutter of the valve itself. When the valve shutter is in the first position, corresponding to an open state of the shut-off valve, a first switch is activated. When the shutter is in the second position, corresponding to a closed state of the valve, a second switch is activated. The activation of each switch is detected by a control unit of the gas meter, which is thus able to identify the state of the shut-off valve.

However, the mechanical parts of the switches are subject to corrosion - for example, galvanic corrosion and/or oxidation- and wear, so that, in time, it may not be possible to detect the state of the shut-off valve correctly.

Additionally, each switch requires a respective wiring, generally two-wire wiring, for the operation thereof. Consequently, the design, production and assembly of the shut-off valve and, more generally, of the entire gas meter, are complicated by the presence of such wiring.

Solutions are known from patent applications US2016/369898 and US2014/343734, wherein the state of a shut-off valve of a gas meter is monitored, by monitoring the electric absorption of an actuator, which, when coupled to the valve, switches it from an open state to a closed state.

### OBJECTS AND SUMMARY OF THE INVENTION

It is an object of the present invention to overcome the drawbacks of the prior art.

In particular, it is an object of the present invention to provide a method for identifying the state of a shut-off valve in a gas meter, which is simple and effective.

It is also an object of the present invention to provide a gas meter, which is simple to produce and allows the state of the shut-off valve to be detected reliably for many years.

These and other objects of the present invention are achieved by means of a device incorporating the features of the appended claims, which constitute an integral part of the present description.

According to one aspect of the present invention, the gas meter comprises a hollow body, an inlet conduit and an outlet conduit in fluid communication with a measuring compartment of the hollow body. An actuator is coupled to a shut-off valve to switch it between an open state, in which it allows the flow of gas into the measuring compartment and a closed state, in which it blocks the flow of gas into the measuring compartment. To detect the state of the valve, the electric absorption of the actuator is monitored and the switching from one state to the other of the shut-off valve is determined, based on the detection of a change, above a threshold, in the electric absorption of the actuator. The method comprises measuring an operating temperature of the shut-off valve and, based on the temperature measured, determining a minimum acceptable time and a maximum acceptable time for the switching of the valve from one state to the other. Thus, the method comprises the step of counting a time elapsed from the start of a switching from one state to the other, and checking if the time elapsed is comprised between the minimum acceptable time and the maximum acceptable time.

In this way, it is possible to consider the normal changes in operation of the valve due to the operating conditions of the gas meter and check that the shut-off valve has reached the desired state in a simple and reliable manner and without requiring sensors comprising mechanical parts, which are movable or exposed to the gas and, thus to the risk of corrosion.

In one embodiment, the method for detecting the state of the shut-off valve further comprises the step of counting a time elapsed, from the start of a switching of the shut-off valve, and checking if the time elapsed is less than a minimum acceptable time.

Thanks to such solution, it is possible to identify some types of faults, in particular a possible obstruction of the shut-off valve.

In one embodiment, the method for detecting the state of the shut-off valve further comprises the step of counting a time elapsed from a start of a switching of the shut-off valve, and checking if the time elapsed is greater than a maximum acceptable time.

Thanks to such solution, it is possible to identify other types of faults, in particular, it is possible to identify if a valve is idling.

In one embodiment, the method also comprises communicating the current state of the shut-off valve to a remote device.

Thanks to this solution, it is possible to update a remote device, such as an IT network of a gas distributor, in good time, on the state of the gas meter and, in particular, signal faults of the shut-off valve in good time.

In one embodiment, a safety procedure is carried out, if the time elapsed is not comprised between the minimum acceptable time and the maximum acceptable time. The safety procedure can invert the switching of the shut-off valve and bring the valve back to the previous state. Additionally or alternatively, the safety procedure can execute an alarm signal, for example, through the user interface of the control system.

Thanks to this solution, it is possible to mitigate the negative effects of the fault and/or call the attention of a user or a technician in the event of a fault.

In one embodiment, the monitoring of the electric absorption of the actuator comprises monitoring the intensity of electric current absorbed by the actuator to detect a change in the intensity of electric current absorbed.

In this way, the identification of the changes in the electric absorption of the actuator - and, thus, of the switchings of the stop valve - are implemented in a particularly efficient manner.

A different aspect of the present invention is aimed at a gas meter comprising a hollow body, which defines a measuring compartment, an inlet conduit and an outlet conduit in fluid communication with the measuring compartment. An actuator is coupled to a shut-off valve, preferably, it is coupled to the inlet conduit, to switch it between an open state, in which it allows the flow of gas into the measuring compartment and a closed state, in which it blocks the flow of gas into the measuring compartment. Furthermore, the gas meter comprises a control system configured to detect the state of the valve, monitoring the electric absorption of the actuator, and determining the switching of the shut-off valve from one state to the other, based on the detection of a change in the electric absorption of the actuator, above a threshold. The control system is configured to count a time elapsed, from a start of a switching of the shut-off valve, and check if the elapsed time is comprised between a minimum switching time and a maximum switching time. The minimum acceptable time and the maximum acceptable time are determined by the control system, based on the temperature measured by a temperature sensor adapted to measure an operating temperature of the shut-off valve.

Thanks to such solution, it is possible to know the state of the shut-off valve with precision, without implementing specific mechanical or electromechanical components, thus, the gas meter is simple and cheap to produce. In particular, it is possible to monitor the temperature of the shut-off valve during the operation of the same and compensate the normal changes in operation of the valve due to the operating conditions of the gas meter.

In one embodiment, the shut-off valve is a ball valve.

This type of valve is particularly adapted for the purpose of selectively blocking the flow of gas into the measuring compartment in the meter.

Further features and objects of the present invention will become clearer from the following description.

### BRIEF DESCRIPTION OF THE DRAWINGS

The invention will be described below with reference to various examples, provided for non-limiting, explanatory purposes, and illustrated in the attached drawings. These drawings illustrate different aspects and embodiments of the present invention and, where appropriate, reference numerals illustrating structures, components, materials and/or similar elements in different figures are indicated with similar reference numerals.
Figure 1 is a schematic representation of a gas meter according to one embodiment of the present invention;
Figure 2 is a block diagram of the gas meter in Figure 1;
Figure 3 is a flow diagram of a method for controlling a flow of gas in a gas meter according to one embodiment of the present invention, and
Figures 4A, 4B and 4C are graphs of the trend of the current absorbed by an actuator of a shut-off device of the gas meter in Figures 1 and 2.

### DETAILED DESCRIPTION OF THE INVENTION

While the invention is susceptible to various modifications and alternative constructions, certain preferred embodiments are shown in the drawings and are described in detail below. Nonetheless, it must be understood that there is no intention to limit the invention to the specific embodiment illustrated, but, on the contrary, the invention intends to cover all modifications and alternative and equivalent constructions that lie within the scope of the invention, as defined in the claims.

The use of "for example", "etc.", "or" indicates non-exclusive alternatives without limitation, unless otherwise stated. The use of "includes" means "includes, but not limited to" unless otherwise stated.

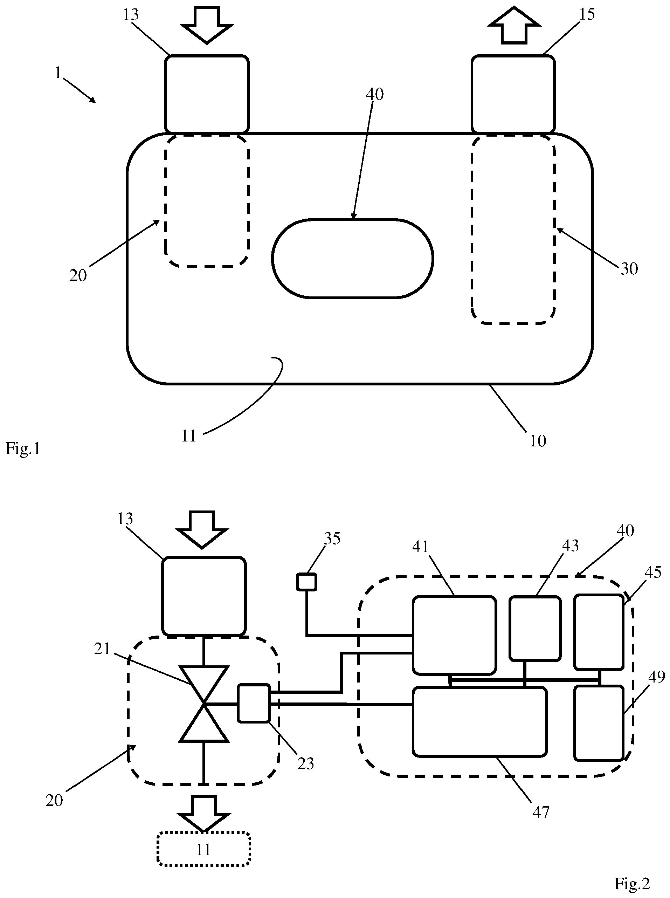

With reference to Figures 1 and 2, a gas meter 1 is described according to one embodiment of the present invention. The gas meter 1 comprises a hollow, box-like body 10, which delimits a measuring compartment 11 therein. An inlet conduit 13 and an outlet conduit 15 are made in the hollow body 10, putting the measuring compartment 11 in fluid communication with the environment external to the gas meter.

A shut-off device 20 is coupled to the inlet conduit 13, to selectively block a flow of gas into the measuring compartment 11.

The shut-off device 20 comprises a shut-off valve 21, for example, a ball valve, which is adapted to selectively block the fluid communication between the inlet conduit 13 and the measuring compartment 11, and an actuator 23 operatively connected to the shut-off valve 21, to switch it between a closed state, in which it blocks the flow of gas into the measuring compartment 11, and an open state, in which it allows the flow of gas into the measuring compartment 11. 35

Furthermore, a measuring apparatus 30 is coupled to the outlet conduit 15, for measuring the flow of gas crossing the measuring compartment 11.

Additionally, the gas meter 1 comprises a temperature sensor 35 housed inside the measuring compartment 11. For example, the temperature sensor 35 is comprised in the measuring device 30, provided to measure an operating temperature T_{L} of the gas 1 meter and, thus, of the shut-off valve 21.

The gas meter 1 also comprises an electronic control system 40, for example, enclosed in a casing, which is coupled to a side wall of the hollow body 10, on a surface of the same, exposed to the external environment - i.e., opposite the measuring compartment 11.

The control system 40 comprises a processor module 41 such as a microcontroller, a microprocessor, an ASIC, an FPGA, which is configured to control the operation of the gas meter 1, as described below, and a memory module 43, adapted to memorise instructions and/or operational data.

Preferably, the control system 40 comprises a telecommunications module 45, configured to exchange information with a remote device (not shown) - for example, an information system managed by a gas distributor - by means of a wired connection and/or in radio frequency.

The control system further comprises a supply module 47, adapted to supply electricity to the components of the control system 40, to the shut-off device 20 and to the measuring apparatus 30.

Advantageously, the control system 40 is provided with a user interface 49 equipped with input devices - for example, one or more buttons - and output devices - for example, a screen, one or more LEDs, a buzzer, etc. exposed on the casing to allow information to be supplied to an operator and receive instructions from the same.

Finally, the control system 40 can further comprise one or more ancillary circuits, such as a circuit for generating a synchrony signal (clock), amplifiers for input/output signals, batteries, etc., not shown in the figures.

The control system 40 is operatively coupled to the shut-off device 20 and to the measuring apparatus 30 to control them and supply them. In particular, the control system 40 is operatively connected to the actuator 23 of the shut-off device 20 so as to command the actuation thereof and thus control the opening and closing of the shut-off valve 21. The control system 40 is also operatively connected to the temperature sensor 35 for receiving indications of an operating temperature T_{L} of the shut-off device 20. For example, the control system 40 is coupled to the actuator 23 and to the temperature sensor 35 by means of a convenient wiring.

In one embodiment, the control system 40 is configured to monitor the state of the shut-off valve 21 of the shut-off device 20 according to instructions supplied through the telecommunications module 45 by the aforesaid remote device (not shown) - for example, the information system managed by a gas distributor.

In particular, the control system 40 is configured to supply electricity to the shut-off device 20, in particular to the actuator 23. By alternating the polarity of the voltage and current supplied to the actuator 23, the control system 40 controls the switching of the shut-off 21 from one state to the other. For example, the supply module 47 of the control system 40 is configured to supply the actuator 23 with an electric current and voltage having a first polarity for switching the shut-off valve 21 from the open state to the closed state, while the supply module 47 supplies the actuator 23 with a voltage and a current having opposite polarity to the first, to switch the shut-off valve 21 in an opposite direction, i.e. from the closed state to the open state.

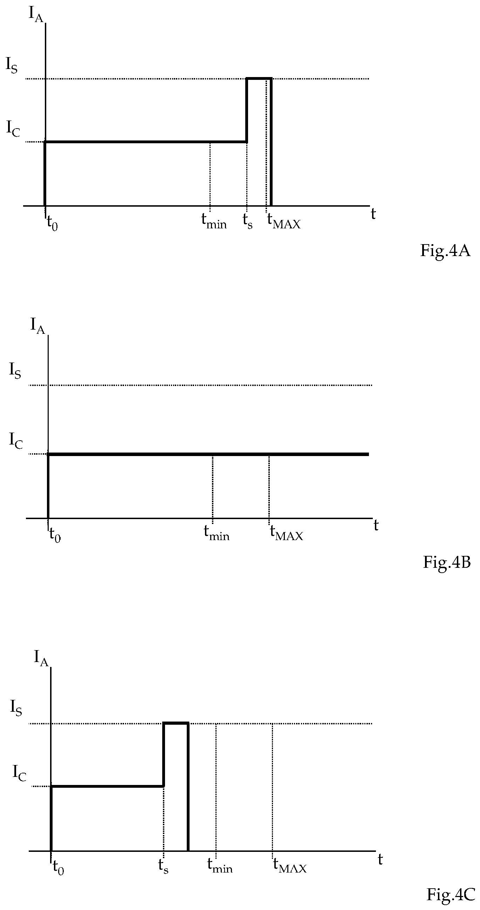

In particular, as can be appreciated in the graph in Figure 4A, the control system 40 is adapted to supply an electric current IA(t) to the actuator 23 to switch the shut-off valve 21 from one state to the other. In detail, the electric current IA(t) supplied to the actuator 23 is initially supplied with a switching intensity Ic - absorbed during the switching of the shut-off valve 21 from one state to the other (graph line in the interval to ≤ t < ts). Successively, the intensity of the electric current IA(t) varies - increases - to a stop intensity Is - absorbed when the shut-off valve 21 reaches the open or closed state (in t = ts) - with the shutter of the shut-off valve 21 in abutment against a limit stop -, or if the shut-off valve 21 blocks in an intermediate position due to a fault (as shown in Figure 4C). The switching intensity Ic is lower than the stop intensity Is because a resistant torque, to which the actuator 23 is subjected, has a lower value when the shut-off valve 21 is in communication and a higher value when it is the same blocked in the open or closed state. On reaching the desired state, the shutter (not shown) of the shut-off valve 21 is in abutment against a corresponding stop element (not shown) and the supply of the actuator 23 can be interrupted.

The switching time tc (where tc = ts, in the example in Figure 4A) needed for the shut-off valve 21 to switch from one state to the other depends on various factors. Such switching time, for example, depends on the type and structural characteristics (such as shutter dimensions, seat and body) of the shut-off valve 21 used, as well as the type and structural characteristics (such as the driving torque developed) of the actuator, and on the environmental conditions in which the shut-off valve has to operate.

In particular, the switching time tc depends on the operating temperature T_{L} of the shut-off device 20 - in particular, of the shut-off valve 21. In fact, such temperature influences the physical properties of the materials - in particular, the rubber of the seals - and, consequently, the internal frictions between the components of the valve, such as, for example the existing frictions between the shutter and seals of the shut-off valve 21.

For example, tests carried out by the Applicant on a Johnson Electric ball valve ZGV114 have made it possible to determine that the switching time tc is of about 5 seconds when the operating temperature T_{L} corresponds to a standard ambient temperature of 35° C. Alternatively, at an operating temperature T_{L} = - 35° C the switching time tc increases to 8 seconds or more. This increase in the switching time tc is caused, for example, by the hardening of the sealing gaskets of the shut-off valve 21 due to the low associated operating temperature T_{L}.

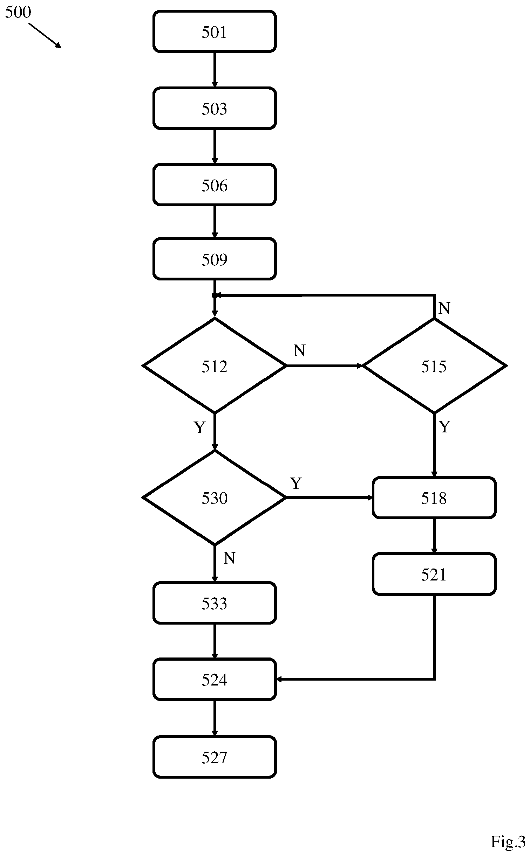

The control system 40 is configured to implement a method 500, shown in Figure 3, which allows the monitoring of the state of the shut-off valve 21. In the considered example, the method comprises monitoring the electric absorption - for example, the absorption of electricity, electric power or electric current - of the actuator 23 so as to identify the switchings of the shut-off valve 21 between the open state and the closed state and vice versa.

The method 500 is implemented automatically by the control system 40. In the considered example, the processor module 41 is configured to operate according to instructions memorised in the memory module 43, for example, after receiving a switching command supplied by the remote device through the telecommunications module 45.

In a preferred embodiment, the method 500 comprises measuring (block 501) the operating temperature T_{L} of the shut-off valve 21. For example, the control system 40 is configured to acquire a measurement of the operating temperature T_{L} from the sensor 35 continuously or periodically.

Based on the measurement of the operating temperature T_{L}, a corresponding pair of times tₘᵢₙ and t_{MAX} is selected (block 503), indicating a minimum acceptable switching time, denoted below as minimum time tₘᵢₙ, and a maximum acceptable switching time, denoted below as maximum time t_{MAX} respectively, within which a completion is expected of the switching of the shut-off valve 21, from one state to the other. The switching time tc is thus comprised between the minimum time tₘᵢₙ and the maximum time t_{MAX}. In particular, the maximum time t_{MAX} is preferably, but not necessarily, greater than the switching time tc.

The minimum and maximum times tₘᵢₙ and t_{MAX} allow the many variables at stake to be considered, such as, for example, the age of the meter and the ageing and wear of the materials. For example, if a switching time tc of 6 seconds is comprised for the shut-off valve 21 at a certain operating temperature T_{L}, the corresponding interval of time for completion may be from 4 to 8 seconds, with tₘᵢₙ=4s and t_{MAX}=8s.

The memory module 43 stores respective values of the minimum time instant tₘᵢₙ and of the maximum time instant t_{MAX} for different values of the operating temperature T_{L}.

Thus, the control system 40 selects respective values of the minimum tₘᵢₙ and maximum t_{MAX} times, depending on the operating temperature value T_{L} received by the temperature sensor. If the operating temperature T_{L} measured by the sensor 35 doesn't correspond to one of the operating temperature values T_{L} memorised in the memory module 43, the control system 40 will select the values of the minimum times tₘᵢₙ and maximum times t_{MAX} associated with the operating temperature value T_{L} memorised closest to the temperature value measured by the sensor 35.

Preferably, an intensity of the electric current supplied to the actuator 23 to switch the shut-off valve 21 is also selected (block 506), based on the measured operating temperature T_{L}. To this end, the control system 40 is configured to select the intensity of the electric current IA(t) supplied by the supply module 43 and absorbed by the actuator 23 of the shut-off device 20. In detail, the control system 40 selects the switching current intensity Ic - to be supplied to the actuator 23 during the switching of the shut-off valve 21 from one state to the other, based on the operating temperature T_{L} measured. For example, the memory module 43 memorises two or more switching current intensities Ic - each associated with a respective operating temperature T_{L}. In fact, the operating temperature T_{L} influences the friction coefficients among components (such as shutter, seals and seat of the shutter) of the shut-off valve 21; therefore, due to the adaptation of the electricity supplied to the actuator 23 based on the operating temperature T_{L}- in particular, due to the adaptation of the switching intensity Ic of the electric current IA(t) - it is possible to obtain a reliable switching of the shut-off valve 21.

The method 500 further comprises counting (block 509) the time elapsed ts from the start of a switching of the shut-off valve 21 - i.e., from an initial time instant to. For example, the control system 40 periodically increases a meter - for example, memorised in the memory module 43 - starting from the initial time instant to, in which it commands the switching of the shut-off valve 21, for example, supplying the actuator 23 of the shut-off device 20 with electric current and voltage of opportune polarity, as described above.

The electric absorption of the shut-off device 20, in particular, the electric absorption of the actuator 23 is monitored (decision block 512) during the switching, with the aim of detecting changes in the same above a threshold value. For example, the control system 40 is configured to monitor the trend of the electric current IA(t) absorbed by the actuator 23 of the shut-off device 20 so as to detect a change in the intensity thereof above a threshold intensity Ith and identify the stopping of the shutter of the shut-off valve. In particular, the threshold intensity Ith can be comprised between the switching intensity Ic and the stopping intensity Is, preferably comprised in an interval of values, which goes from an intermediate value between the switching intensity Ic and the stopping intensity Is and the stopping intensity Is itself (i.e., Ic+(Is-Ic)/2 ≤ Iₜₕ ≤ Is).

If a change in the electric absorption of the actuator 23 above the threshold value Iₜₕ (outlet branch N of the decision block 512) is not detected, then the control system 40 verifies (block 515) whether the time elapsed ts is greater than the maximum switching time instant t_{MAX}.

If the time elapsed ts is not greater than the maximum switching time instant t_{MAX} (outlet branch N of the decision block 515), the operation returns to the block 512 and continues to monitor the electric absorption.

If the time elapsed ts is greater than the maximum switching time instant t_{MAX} (outlet branch N of the decision block 515), a fault of the shut-off valve 21 is identified (block 518), because the comprised change in electric absorption is not detected (condition illustrated in the graph in Figure 4B). In this case, the fault may be due to a breakage of one or more mechanical parts of the shut-off valve 21, preventing the same from stopping in the desired state.

In this case, the implementation of a safety procedure (block 521) can be comprised. For example, the safety procedure can comprise inverting the switching of the shut-off valve 21 in an attempt to return to the previous state and/or emitting an alarm signal by means of the user interface 49.

Then, the current state of the shut-off valve 21, in this case the fault, is memorised (block 524) in the memory module 43 and communicated (block 527) to the remote device through the telecommunications module 45.

Going back to the decision block 512, if a change in the electric absorption of the actuator 23 is detected above the threshold value (outlet branch Y of the decision block 512) a check (decision block 530) is made of whether the time elapsed ts is less than the minimum time tₘᵢₙ associated with the measured operating time T_{L}.

If the elapsed time ts is less than the minimum time tₘᵢₙ (outlet branch Y of the decision block 530), then the operation moves to the block 518, identifying a fault of the shut-off valve 21. In this case, the change in the electric absorption of the actuator 23 occurred before the minimum time tₘᵢₙ (t_{S} < tₘᵢₙ, condition illustrated in the graph in Figure 4C) and can indicate a breakage of a component of the shut-off valve 21, which blocks the movement thereof on reaching a limit switch, or the presence of a foreign body in the same, preventing the complete switching of the shut-off valve 21.

Thus, the operation moves to the block 521, in which the safety procedure is implemented, and then, to the blocks 524 and 527 to memorise and communicate the fault respectively, as described below.

Going back to the decision block 530, if the elapsed time ts is not less than the minimum time tₘᵢₙ (outlet branch N of the decision block 530), the switching of the shut-off valve 21 is considered (block 533) to have been completed correctly.

In other words, the steps implemented at the decision blocks 512, 530 and 533 determine a correct switching of the shut-off valve 21, checking that the change in electric absorption occurs between the minimum and maximum times tₘᵢₙ and t_{MAX} (tₘᵢₙ ≤ t_{S} ≤ t_{MAX}, condition illustrated in the graph in Figure 4A)

Next, the operation moves to the block 524 - mentioned previously - to memorise the current state of the valve, in this case one from among the open state or the closed state, in the memory module 43. To this end, the control system 40 can memorise, in the memory module 43, a state information, indicative of the current state of the shut-off valve 21. For example, the state information can comprise two logic states to indicate the current state of the valve 21 or a fault.

After this, the operation moves to the block 527 - mentioned previously - to communicate the completed switching of the shut-off valve 21 and, if necessary, the state (open or closed) currently assumed by the same, to the remote device through the telecommunications module 45 of the control system. For example, the control system 40 is configured to transmit, to the remote device, a signal comprising the state information through the telecommunications module 45.

The invention, thus conceived, is susceptible to numerous modifications and variations, all lying within the scope of the present invention, based on the appended claims. In particular, one or more steps of the method can be omitted, performed in a different order and/or parallel to one another.

For example, in one alternative embodiment, the step of measuring the operating temperature T_{L} can be omitted. Consequently, the alternative method will always use the same values for the minimum and maximum times tₘᵢₙ and t_{MAX}.

Alternatively, or additionally, pairs of different minimum and maximum times tₘᵢₙ and t_{MAX} can be defined, with specific pairs for the switching from the open state to the closed state and other specific pairs for the inverse switching, i.e. from the closed state to the open state. In this case, the control system is configured to select the minimum and maximum times tₘᵢₙ and t_{MAX} depending on the state information kept in the memory module 43. In other words, first, the current state of the shut-off valve 21 is identified and then the pair of minimum and maximum times tₘᵢₙ and t_{MAX} is selected to switch the shut-off valve 21 from the current state to the opposite state.

Furthermore, the measuring of the operating time T_{L} can only be implemented to adjust the minimum and maximum times tₘᵢₙ and t_{MAX} without modifying the switching current intensities.

In a different embodiment, the method can comprise simply identifying the completed switching after detecting a change in the electric absorption of the actuator regardless of the duration of the switching itself.

In an alternative embodiment, a number of switchings carried out by the valve can be counted. Furthermore, the open or closed state can be determined on the basis of the number of switchings counted knowing the initial state.

In one alternative embodiment, the method can comprise memorising one or more, for example, all, of the switchings carried out and, if necessary, the corresponding elapsed time ts and/or the operating temperature T_{L} measured. Alternatively, one or more pieces of such information can only be memorised in the event of a fault.

In a further embodiment, the relative time elapsed ts and/or the measured operating temperature T_{L} are also communicated to the remote device, together with the current state or the fault.

Finally, all details can be replaced by other technically equivalent elements. For example, the shut-off valve could be a butterfly- or a gate-type valve instead of a ball valve.

Furthermore, the operating temperature T_{L} can be measured by means of a temperature sensor positioned in a different part of the gas meter 1, for example, inside the inlet conduit 13, inside the measuring compartment 11, on one of the walls of the hollow body 10 or in the shut-off device 20, for example, close to, or integrated in the shut-off valve 21. Again, the gas meter 1 can comprise more than one of a temperature sensor, each having a respective positioning, and obtain the operating temperature T_{L} by combining the measurements provided by such temperature sensors.

In conclusion, any materials and contingent dimensions and shapes can be used according to the specific implementation needs without thereby departing from the protective scope of the following claims. In particular, although the embodiment considered refers to a gas meter, the principles of the present invention can be adapted to a meter for any fluid, also a non aeriform fluid, *mutatis mutandis.*

## Claims

1. A method (500) for monitoring a state of a shut-off valve (21) of a gas meter (1), the gas meter comprising a hollow body (10) which delimits a measuring compartment (11), an inlet conduit (13) and an output conduit (15) in fluid communication with the measuring compartment (11), and an actuator (23) coupled to the shut-off valve (21) to switch it between an open state in which the shut-off valve (21) allows the inflow of gas in the measuring compartment (11) and a closed state in which the shut-off valve (21) blocks the flow of gas into the measuring compartment (11), the method (500) comprising the steps of:
- monitoring (512) an electric absorption of the actuator (23), and
- determining (533) the switching of the shut-off valve (21) from one state to the other on the basis of the detection of a change in the electric absorption of the actuator (23) above a threshold,
**characterized by** further comprising the steps of:
- measuring (501) a temperature (T_{L}) of the shut-off valve (21), and
- determining (503) a minimum switching time (tₘᵢₙ) and a maximum switching time (t_{MAX}) based on the measured temperature (T_{L}),
- counting (509) an elapsed time (ts) from a start of the switching of the shut-off valve (21) from one state to the other, and
- checking (515, 530) if the elapsed time (ts) is comprised between the minimum switching time (tₘᵢₙ) and the maximum switching time (tMAx).

2. Method (500) according to claim 1, further comprising the steps of:
- counting (509) an elapsed time (ts) from a start of the switching of the shut-off valve (21) from one state to the other, and
- checking (530) if the elapsed time (ts) is less than the minimum switching time (tmin).

3. Method (500) according to any one of the preceding claims, further comprising the steps of
- counting (509) an elapsed time (ts) from a start of the switching of the shut-off valve (21) from one state to the other, and
- checking (515) if the elapsed time (ts) is greater than the maximum switching time (t_{MAX}).

4. Method (500) according to any one of the preceding claims, further comprising the steps of:
- communicating (527) to a remote device the current state of the shut-off valve (21).

5. Method (500) according to any one of the preceding claims from 2 to 4, further comprising at least one of the steps of:
- inverting (521) the switching of the shut-off valve (21), and
- execute (521) an alarm signal, in case the elapsed time (ts) is not comprised between the minimum switching time (tₘᵢₙ) and the maximum switching time (t_{MAX}).

6. Method (500) according to any one of the preceding claims, in which the step of monitoring (512) an electric absorption of the actuator (23) provides for:
- monitoring (512) an intensity of an electric current (I_{A}(t)) absorbed by the actuator (23) to detect a change in its intensity.

7. A gas meter (1) comprising
- a hollow body (10) comprising a measuring compartment (11),
- an input conduit (13) and an outlet conduit (15) in fluid communication with the measuring compartment (11),
- a shut-off valve (21),
- a coupled actuator (23) to the shut-off valve (21), to switch it between an open state in which the shut-off valve (21) allows the flow of gas into the measuring compartment (11) and a closed state in which it blocks the gas supply in the compartment of measurement (11), and
- a control system (40) configured to monitor an electric absorption of the actuator (23), and to determine the switching from one state to the other of the shut-off valve (21) based on the detection of a change in the electric absorption of the actuator (23) above a threshold,
**characterized by**
further comprising a temperature sensor (35) suitable for measuring a temperature (T_{L}) of the shut-off valve (21), and
by the fact that the control system (40) is configured
to determine a minimum switching time (tₘᵢₙ) and a maximum switching time (t_{MAX}) based on the measured temperature (T_{L}),
to count an elapsed time (ts) from a start of the switching of the shut-off valve (21) from a state to the other, and
to check whether the elapsed time (ts) is comprised between the minimum switching time (tₘᵢₙ) and the maximum switching time (t_{MAX}).

8. The gas meter (1) according to claim 7, wherein the shut-off valve (21) is a ball valve.

9. The gas meter (1) according to claim 7 or 8, wherein the control system is further configured to implement the method according to any of claims from 2 to 6.

## Patentansprüche

1. Ein Verfahren (500) zum Überwachen eines Zustands eines Absperrventils (21) eines Gaszählers (1), wobei der Gaszähler einen Hohlkörper (10), der eine Messkammer (11) begrenzt, eine Eingangsleitung (13) und eine Ausgangsleitung (15), die mit der Messkammer (11) in Fluidverbindung stehen, und ein Stellglied (23) umfasst, das mit dem Absperrventil (21) gekoppelt ist, um es zwischen einem offenen Zustand, in dem das Absperrventil (21) das Einströmen von Gas in die Messkammer (11) zulässt, und einem geschlossenen Zustand umzuschalten, in dem das Absperrventil (21) das Einströmen von Gas in die Messkammer (11) blockiert, wobei das Verfahren (500) die Schritte umfasst:
- Überwachen (512) einer Stromaufnahme des Stellglieds (23), und
- Bestimmen (533) des Umschaltens des Absperrventils (21) von einem Zustand in den anderen auf der Grundlage der Erfassung einer Änderung der Stromaufnahme des Stellglieds (23) oberhalb eines Schwellenwerts,
**dadurch gekennzeichnet, dass** es ferner die folgenden Schritte umfasst:
- Messen (501) einer Temperatur (T_{L}) des Absperrventils (21), und
- Bestimmung (503) einer minimalen Schaltzeit (tₘᵢₙ) und einer maximalen Schaltzeit (t_{MAX}) in Abhängigkeit von der gemessenen Temperatur (T_{L}),
- Zählen (509) einer verstrichenen Zeit (ts) ab einem Beginn des Umschaltens des Absperrventils (21) von einem Zustand in den anderen, und
- Prüfung (515, 530), ob die abgelaufene Zeit (tₛ) zwischen der minimalen Schaltzeit (tₘᵢₙ) und der maximalen Schaltzeit (t_{MAX}) liegt.

2. Verfahren (500) nach Anspruch 1, das ferner die Schritte umfasst:
- Zählen (509) einer verstrichenen Zeit (tₛ) ab einem Beginn des Umschaltens des Absperrventils (21) von einem Zustand in den anderen, und
- Prüfung (530), ob die abgelaufene Zeit (ts) kleiner ist als die minimale Schaltzeit (tmin).

3. Verfahren (500) nach einem der vorhergehenden Ansprüche, welches außerdem die Schritte umfasst
- Zählen (509) einer verstrichenen Zeit (ts) ab einem Beginn des Umschaltens des Absperrventils (21) von einem Zustand in den anderen, und
- Prüfung (515), ob die abgelaufene Zeit (ts) größer ist als die maximale Schaltzeit (t_{MAX}).

4. Verfahren (500) nach einem der vorhergehenden Ansprüche, das ferner die Schritte umfasst:
- Übermittlung (527) des aktuellen Zustands des Absperrventils (21) an eine entfernte Einrichtung.

5. Verfahren (500) nach einem der vorangehenden Ansprüche 2 bis 4, ferner umfassend mindestens einen der Schritte:
- Umkehrung (521) des Schaltzustands des Absperrventils (21), und
- Ausgeben (521) eines Alarmsignals, wenn die abgelaufene Zeit (ts) nicht zwischen der minimalen Schaltzeit (tₘᵢₙ) und der maximalen Schaltzeit (t_{MAX}) liegt.

6. Verfahren (500) nach einem der vorhergehenden Ansprüche, bei dem der Schritt der Überwachung (512) einer Stromaufnahme des Stellglieds (23) vorsieht:
- Überwachen (512) einer Intensität eines elektrischen Stroms (I_{A}(t)), der von dem Stellglied (23) aufgenommen wird, um eine Änderung seiner Intensität zu erkennen.

7. Ein Gaszähler (1) umfassend
- einen Hohlkörper (10) mit einer Messkammer (11),
- eine Eingangsleitung (13) und eine Ausgangsleitung (15), die mit der Messkammer (11) in Fluidverbindung stehen,
- ein Absperrventil (21),
- ein mit dem Absperrventil (21) gekoppeltes Stellglied (23), um es zwischen einem offenen Zustand, in dem das Absperrventil (21) das Einströmen von Gas in den Messraum (11) zulässt, und einem geschlossenen Zustand umzuschalten, in dem es das Einströmen von Gas in den Messraum (11) blockiert, und
- ein Steuersystem (40), das derart konfiguriert ist, dass es eine Stromaufnahme des Stellglieds (23) überwacht und das Umschalten des Absperrventils (21) von einem Zustand in den anderen auf der Grundlage der Erfassung einer Änderung der Stromaufnahme des Stellglieds (23) oberhalb eines Schwellenwerts bestimmt,
**dadurch gekennzeichnet, dass**
ferner ein Temperatursensor (35) umfasst ist, der zur Messung einer Temperatur (T_{L}) des Absperrventils (21) geeignet ist, und
dadurch, dass das Steuersystem (40) derart konfiguriert ist, dass es
eine minimale Schaltzeit (tₘᵢₙ) und eine maximale Schaltzeit (t_{MAX}) basierend auf der gemessenen Temperatur (T_{L}) zu bestimmen, eine verstrichene Zeit (ts) von einem Beginn des Umschaltens des Absperrventils (21) von einem Zustand in den anderen zu zählen, und
um zu prüfen, ob die abgelaufene Zeit (tₛ) zwischen der minimalen Schaltzeit (tₘᵢₙ) und der maximalen Schaltzeit (t_{MAX}) liegt.

8. Gaszähler (1) nach Anspruch 7, wobei das Absperrventil (21) ein Kugelventil ist.

9. Gaszähler (1) nach Anspruch 7 oder 8, wobei das Steuersystem ferner derart konfiguriert ist, dass es das Verfahren nach einem der Ansprüche 2 bis 6 durchführt.

## Revendications

1. Procédé (500) pour surveiller un état d'un robinet d'arrêt (21) d'un compteur de gaz (1), le compteur de gaz comprenant un corps creux (10) qui délimite un compartiment de mesure (11), un conduit d'entrée (13) et un conduit de sortie (15) en communication fluidique avec le compartiment de mesure (11), et un actionneur (23) couplé au robinet d'arrêt (21) pour la commuter entre un état ouvert dans lequel le robinet d'arrêt (21) permet l'entrée de gaz dans le compartiment de mesure (11) et un état fermé dans lequel le robinet d'arrêt (21) bloque l'écoulement de gaz dans le compartiment de mesure (11), le procédé (500) comprenant les étapes consistant à :
- surveiller (512) une absorption électrique de l'actionneur (23) ; et
- déterminer (533) la commutation du robinet d'arrêt (21) d'un état à l'autre sur la base de la détection d'un changement dans l'absorption électrique de l'actionneur (23) au-dessus d'un seuil,
**caractérisé par le fait qu'**il comprend en outre les étapes consistant à :
- mesurer (501) une température (T_{L}) du robinet d'arrêt (21) ; et
- déterminer (503) une durée de commutation minimale (tₘᵢₙ) et une durée de commutation maximale (t_{MAX}) sur la base de la température mesurée (TL) ;
- compter (509) un temps écoulé (tₛ) depuis un début de la commutation du robinet d'arrêt (21) d'un état à l'autre ; et
- vérifier (515, 530) si le temps écoulé (tₛ) est compris entre la durée de commutation minimale (tₘᵢₙ) et la durée de commutation maximale (t_{MAX}).

2. Procédé (500) selon la revendication 1, comprenant en outre les étapes consistant à :
- compter (509) un temps écoulé (tₛ) depuis un début de la commutation du robinet d'arrêt (21) d'un état à l'autre ; et
- vérifier (530) si le temps écoulé (tₛ) est inférieur à la durée de commutation minimale (tₘᵢₙ).

3. Procédé (500) selon l'une quelconque des revendications précédentes, comprenant en outre les étapes consistant à :
- compter (509) un temps écoulé (tₛ) depuis un début de la commutation du robinet d'arrêt (21) d'un état à l'autre ; et
- vérifier (515) si le temps écoulé (tₛ) est supérieur à la durée de commutation maximale (t_{MAX}).

4. Procédé (500) selon l'une quelconque des revendications précédentes, comprenant en outre les étapes consistant à :
- communiquer (527) à un dispositif distant l'état actuel du robinet d'arrêt (21).

5. Procédé (500) selon l'une quelconque des revendications précédentes 2 à 4, comprenant en outre au moins l'une des étapes consistant à :
- inverser (521) la commutation du robinet d'arrêt (21) ; et
- exécuter (521) un signal d'alarme, dans le cas où le temps écoulé (tₛ) n'est pas compris entre la durée de commutation minimale (tₘᵢₙ) et la durée de commutation maximale (t_{MAX}).

6. Procédé (500) selon l'une quelconque des revendications précédentes, dans lequel l'étape de surveillance (512) d'une absorption électrique de l'actionneur (23) prévoit :
- surveiller (512) une intensité d'un courant électrique (I_{A}(t)) absorbé par l'actionneur (23) pour détecter un changement de son intensité.

7. Compteur de gaz (1) comprenant :
- un corps creux (10) comprenant un compartiment de mesure (11) ;
- un conduit d'entrée (13) et un conduit de sortie (15) en communication fluidique avec le compartiment de mesure (11) ;
- un robinet d'arrêt (21) ;
- un actionneur (23) couplé au robinet d'arrêt (21), pour la commuter entre un état ouvert dans lequel le robinet d'arrêt (21) permet l'écoulement de gaz dans le compartiment de mesure (11) et un état fermé dans lequel il bloque l'amenée de gaz dans le compartiment de mesure (11) ; et
- un système de commande (40) configuré pour surveiller une absorption électrique de l'actionneur (23), et pour déterminer la commutation d'un état à l'autre du robinet d'arrêt (21) sur la base de la détection d'un changement dans l'absorption électrique de l'actionneur (23) au-dessus d'un seuil,
**caractérisé par le fait qu'**il comprend en outre un capteur de température (35) apte à mesurer une température (T_{L}) du robinet d'arrêt (21) ; et
**par le fait que** le système de commande (40) est configuré pour :
déterminer une durée de commutation minimale (tₘᵢₙ) et une durée de commutation maximale (t_{MAX}) sur la base de la température mesurée (T_{L}) ;
compter un temps écoulé (tₛ) depuis un début de la commutation du robinet d'arrêt (21) d'un état à l'autre ; et
vérifier si le temps écoulé (tₛ) est, ou non, compris entre la durée de commutation minimale (tₘᵢₙ) et la durée de commutation maximale (t_{MAX}).

8. Compteur de gaz (1) selon la revendication 7, dans lequel le robinet d'arrêt (21) est un robinet à tournant sphérique.

9. Compteur de gaz (1) selon la revendication 7 ou 8, dans lequel le système de commande est en outre configuré pour mettre en oeuvre le procédé selon l'une quelconque des revendications 2 à 6.
